# EUROPEAN PATENT SPECIFICATION

(11) **EP 2 399 667 B1**
(45) Date of publication and mention of the grant of the patent: **08.03.2017**
(21) Application number: 10167305.1
(22) Date of filing: 25.06.2010
(51) Int. Cl.: B01J 13/16

(54) **Process for producing microcapsules**
Verfahren zum Produzieren von Mikrokapseln
Procédé pour produire des microcapsules

(43) Date of publication of application: 28.12.2011
(73) Proprietor: Cognis IP Management GmbH, 40589 Dusseldorf (DE)
(72) Inventor: Denuell, Wolfgang, 40591 Düsseldorf (DE); Hotz, Jutta, 8006 Zürich (CH)
(74) Representative: BASF IP Association

(56) References cited:
- WO-A1-03/042274
- WO-A1-2004/098767
- WO-A1-2005/016510
- WO-A1-2007/096592
- WO-A2-01/94001
- US-A- 5 011 885
- US-A- 5 342 556
- US-A1- 2002 136 773
- Bayer: "Raw Materials for Automotive Refinish Systems Desmodur/Desmophen/Bayhydrol/Bayhydur/Rosk ydal", Bayer MaterialsScience , February 2005 (2005-02), XP002613607, Retrieved from the Internet: URL:http://200.182.3.36/bpo/home.nsf/04bbd 938b0f97149c1256ac500564711/7710c8878da245 ab832570770063bb8e/$FILE/Repintura.pdf [retrieved on 2010-12-09]

## Description

The application relates to a process for producing microcapsules.

Microcapsules are powders or particles which consist of a core and a wall material surrounding the core, wherein the core is a solid, liquid or gaseous substance which is surrounded by the solid, generally polymeric, wall material. They may be solid, i.e. consist of a single material. Microcapsules have on average a diameter from 1 to 1000 µm.

WO 2007/096592 A1 discloses a process for producing microcapsules, where an aqueous solution of a protective colloid and an organic solution of a mixture of 1,6-hexamethylene diisocyanate and Bayhydur 3100 are brought together until an emulsion is formed, to which at least a polyamine is then added and which is heated to a temperature between 20 and 100°C.

A multitude of shell materials is known for producing microcapsules. The shell can consist either of natural, semisynthetic or synthetic materials. Natural shell materials are, for example, gum arabic, agar agar, agarose, maltodextrins, alginic acid or its salts, e.g. sodium alginate or calcium alginate, fats and fatty acids, cetyl alcohol, collagen, chitosan, lecithins, gelatin, albumin, shellac, polysaccharides, such as starch or dextran, polypeptides, protein hydrolyzates, sucrose and waxes. Semisynthetic shell materials are inter alia chemically modified celluloses, in particular cellulose esters and cellulose ethers, e.g. cellulose acetate, ethyl cellulose, hydroxypropylcellulose, hydroxypropylmethylcellulose and carboxymethylcellulose, and also starch derivatives, in particular starch ethers and starch esters. Synthetic shell materials are, for example, polymers such as polyacrylates, polyamides, polyvinyl alcohol or polyvinylpyrrolidone.

Depending on the type of shell material and the production process, microcapsules are formed in each case with different properties as far as diameter, size distribution and physical and/or chemical properties are concerned.

There is therefore a continuing need to develop novel production processes in order to be able to provide microcapsules with tailored properties.

A first subject matter of the present application is therefore directed to a process for producing microcapsules which contain a shell and a core made of a water-insoluble liquid material, where an aqueous solution of a protective colloid and a solution of a mixture of at least two structurally different at least difunctional isocyanates (A) and (B) in a water-insoluble liquid are brought together until an emulsion is formed, to which an at least difunctional amine is then added, and which is then heated to temperatures of at least 60°C until the microcapsules are formed, wherein the isocyanate (B) is selected from the anionically modified isocyanates and the isocyanate (A) is uncharged, but is not a polyethylene-containing isocyanate.

The process has the advantage that microcapsules of a pregiven size or size distribution can be produced in a targeted manner, it being possible here to produce in particular relatively small microcapsules with diameters from 10 to 60 µm. Moreover, capsules with greater mechanical stability are obtained. Here, in particular those capsules are obtained the shells of which have only a low permeability to the liquid ingredients.

In principle, an aqueous solution of the protective colloid is always produced, and for this the isocyanates (A) and (B) are dissolved in the water-insoluble liquid which later forms the core of the microcapsules; the amine components are then added and the mixture is heated until an emulsion is formed. The temperature for the reaction of the isocyanates with the amine components must be at least 60°C, but better 70°C, but preferably 75 to 90°C and in particular 85 to 90°C, in order to ensure sufficiently rapid reaction progress.
Here, it may be preferred to increase the temperature in stages (e.g. in each case by 10°C) until then, following completion of the reaction, the dispersion is cooled to room temperature (21°C). The reaction time typically depends on the amounts and temperatures used. Usually, however, the elevated temperature for forming the microcapsules is established between ca. 60 minutes to 6 h or up to 8 h.

According to the present teaching, the addition of the amine also preferably takes place with the input of energy, e.g. by using a stirring apparatus.

In order to form an emulsion in the present process, the respective mixtures are emulsified by processes known to the person skilled in the art, e.g. by introducing energy into the mixture through stirring using a suitable stirrer until the mixture emulsifies. The pH is preferably adjusted using aqueous bases, preference being given to using sodium hydroxide solution (e.g. 5% strength by weight).

It is essential to the process that at least two structurally different isocyanates (A) and (B) are used. These can be added in the form of a mixture or separately from one another in the process to the aqueous premix (1) containing the protective colloid and are then emulsified and reacted with the amine. It is also conceivable to meter in both mixtures of (A) and (B), and also the individual isocyanates (A) and (B) separately at different times.

In one preferred embodiment, the process is carried out as follows:
(a) a premix (I) is prepared from water and a protective colloid;
(b) this premix is adjusted to a pH in the range from 5 to 12;
(c) a further premix (II) is prepared from the liquid, water-insoluble material together with the isocyanates (A) and (B);
(d) the two premixes (I) and (II) are brought together until an emulsion is formed and
(e) the at least difunctional amine is then metered into the emulsion from step (d) and
(f) the emulsion is then heated to temperatures of at least 60°C until the microcapsules are formed.

It may be advantageous to adjust the pH in step (b) to values from 8 to 12. Of suitability here are aqueous bases, preferably aqueous sodium hydroxide solution. The formation of the emulsion in step (d), but also step (e) is preferably ensured by using a suitable stirrer.

Another likewise preferred embodiment envisages that
(a) a premix (I) is prepared from water and a protective colloid;
(b) this premix is adjusted to a pH in the range from 5 to 12;
(c) a further premix (II) is prepared from a water-insoluble material that is liquid at 21°C together with the isocyanate (A);
(d) an emulsion is formed from the premixes (I) and (II) by stirring and to this
(e) is added the second isocyanate (B), and then the pH of the emulsion is adjusted to a value from 5 to 10;
(f) and then the at least difunctional amine is metered into the emulsion from step (e) and
(g) then heated to temperatures of at least 60°C until the microcapsules are formed.

In this procedure, the isocyanates (A) and (B) are added separately to the protective colloid before the addition of the amine and the reaction to give the microcapsules takes place. The formation of the emulsion - like the mixing in step (e) also takes place here preferably by using a stirring apparatus.

The pH in step (e) is preferably adjusted to values from 7.5 to 9.0. For step (b), the value can likewise be adjusted from 8 to 12. Of suitability for this purpose are in particular aqueous bases, preferably aqueous sodium hydroxide solution.

### Microcapsules

Within the context of the present teaching, the microcapsules have a shell made of a reaction product of at least two different, at least difunctional isocyanates with amines, preferably with polyamines. The reaction is a polycondensation between the isocyanates and the amines, which leads to a polyurea derivative.

The microcapsules are present in the form of aqueous dispersions, the weight fraction of these dispersions in the capsules being preferably between 15 and 45% by weight and preferably 20 to 40% by weight. The microcapsules have an average diameter in the range from 1 to 500 µm and preferably from 1 to 50 µm or from 5 to 25 µm.

The microcapsules contain water-insoluble liquid or solid contents, e.g. an oil. The fraction of this oil can vary in the range from 10 to 95% by weight, based on the weight of the capsules, where fractions from 70 to 90% by weight may be advantageous. As a result of the process, capsules are obtained which typically have core/shell ratios (w/w) from 20:1 to 1:10, preferably from 5:1 to 2:1 and in particular from 4:1 to 3:1.

The microcapsules which are produced by the present process are preferably free from formaldehyde.

### Protective colloid

During the reaction between the isocyanates and the amines, a protective colloid must be present. This is preferably a polyvinylpyrrolidone (PVP). Protective colloids are polymer systems which, in suspensions or dispersions, prevent a clumping together (agglomeration, coagulation, flocculation) of the emulsified, suspended or dispersed substances. During solvation, protective colloids bind large amounts of water and in aqueous solutions produce high viscosities depending on the concentration. Within the context of the process described herein, the protective colloid may also have emulsifying properties. The aqueous protective colloid solution is likewise preferably prepared with stirring.
The protective colloid may be, but does not have to be, a constituent of the capsule shell, with amounts from 0.1 to at most 15% by weight, but preferably in the range from 1 to 5% by weight and in particular from 1.5 to 3% by weight, based on the weight of the capsules, being possible here.

### Isocyanates

Isocyanates are N-substituted organic derivatives (R-N=C=O) of isocyanic acid (HNCO) tautomeric in the free state with cyanic acid. Organic isocyanates are compounds in which the isocyanate group (-N=C=O) is bonded to an organic radical. Polyfunctional isocyanates are those compounds with two or more isocyanate groups in the molecule.

According to the invention, at least difunctional, preferably polyfunctional, isocyanates are used, i.e. all aromatic, alicyclic and aliphatic isocyanates are suitable provided they have at least two reactive isocyanate groups.

The suitable polyfunctional isocyanates preferably contain on average 2 to at most 4 NCO groups. Preference is given to using diisocyanates, i.e. esters of isocyanic acid with the general structure O=C=N-R-N=C=O, where R' here is aliphatic, alicyclic or aromatic radicals.
Suitable isocyanates are, for example, 1,5-naphthylene diisocyanate, 4,4'-diphenylmethane diisocyanate (MOI), hydrogenated MDI (H12MDI), xylylene diisocyanate (XDI), tetramethylxylol diisocyanate (TMXDI), 4,4'-diphenyl-dimethylmethane diisocyanate, di- and tetraalkyl-diphenylmethane diisocyanate, 4,4'-dibenzyl diisocyanate, 1,3-phenylene diisocyanate, 1,4-phenylene diisocyanate, the isomers of tolylene diisocyanate (TDI), optionally in a mixture, 1-methyl-2,4-diiso-cyanatocyclohexane, 1,6-diisocyanato-2,2,4-trimethyl-hexane, 1,6-diisocyanato-2,4,4-trimethylhexane, 1-iso-cyanatomethyl-3-isocyanato-1,5,5-trimethylcyclohexane, chlorinated and brominated diisocyanates, phosphorus-containing diisocyanates, 4,4'-diisocyanatophenyl-perfluoroethane, tetramethoxybutane 1,4-diisocyanate, butane 1,4-diisocyanate, hexane 1,6-diisocyanate (HDI), dicyclohexylmethane diisocyanate, cyclohexane 1,4-diisocyanate, ethylene diisocyanate, phthalic acid bisisocyanatoethyl ester, also polyisocyanates with reactive halogen atoms, such as 1-chloromethylphenyl 2,4-diisocyanate, 1-bromomethylphenyl 2,6-diisocyanate, 3,3-bischloromethyl ether 4,4'-diphenyldiisocyanate. Sulfur-containing polyisocyanates are obtained, for example, by reacting 2 mol of hexamethylene diisocyanate with 1 mol of thiodiglycol or dihydroxy-dihexyl sulfide. Further suitable diisocyanates are trimethylhexamethylene diisocyanate, 1,4-diisocyanato-butane, 1,2-diisocyanatododecane and dimer fatty acid diisocyanate.

One essential feature of the present process is the obligatory use of two structurally different isocyanates (A) and (B).

Suitable isocyanates of type (A) are at least difunctional compounds (i.e. compounds containing at least two isocyanate groups -N=C=O).
Typical representatives may be hexamethylene diisocyanate (HDI), or derivatives thereof, e.g. HDI biuret (commercially available e.g. as Desmodur N3200), HDI trimers (commercially available as Desmodur N3300) or else dicyclohexylmethane diisocyanates (commercially available as Desmodur W). Toluene 2,4-diisocyanate or diphenylmethane diisocyanate is likewise suitable.

The second isocyanate of type (B) is structurally different from the isocyanate of type (A) and specifically the isocyanate of type (B) must be an anionically modified isocyanate.

The anionically modified isocyanates are known per se. Preferably, these isocyanates of type (B) contain at least two isocyanate groups in the molecule. One or more sulfonic acid radicals are preferably present as anionic groups. Preferably, isocyanates of type (B) are selected which are oligomers, in particular trimers, of hexane 1,6-diisocyanate (HDI). Commercial products of these anionically modified isocyanates are known, for example, under the brand Bayhydur (Bayer), e.g. Bayhydur XP.

The weight ratio of the two isocyanates (A) and (B) is adjusted preferably in the range from 10:1 to 1:10, but in particular in the range from 5:1 to 1:5 and in particular in the range from 3:1 to 1:1.

It is also possible to use mixtures of different isocyanates of types (A) and (B). Besides the isocyanates (A) and (B), further isocyanates can also additionally be used in the process according to the invention.

Preferably, however, only anionically modified isocyanates are used as component (B) in the present process.

### Amines

At least difunctional amines, but preferably polyethyleneimines (PEI), are used as further component in the process according to the invention. Polyethyleneimines are generally polymers in the main chains of which there are NH groups which are separated from one another in each case by two methylene groups:

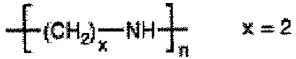

Polyethyleneimines belong to the polyelectrolytes and the complexing polymers. Short-chain, linear polyethyleneimines with a correspondingly high fraction of primary amino groups, i.e. products of the general formula H₂N ⁅CH₂-CH₂-NH⁆*ₙ*H (*n* = 2: diethylenetriamine; *n* = 3; triethylenetetramine; *n* = 4: tetraethylenepentamine) are sometimes called polyethyleneamines or polyalkylenepolyamines.

In the processes according to the invention, polyethyleneimines with a molecular weight of at least 500 g/mol, preferably from 600 to 30 000 or 650 to 25 000 g/mol and in particular from 700 to 5000 g/mol or 850 to 2500 g/mol, are preferably used.

### Protective colloids

In the process according to the invention, PVP is used as protective colloid. PVP is the abbreviation for polyvinylpyrrolidones (also known as polyvidone). According to Römpp Chemie Lexikon, Online-edition 3.6, 2010, they are [poly(1-vinylpyrrolidin-2-ones)], i.e. polymers (vinyl polymers) which conform to the general formula:

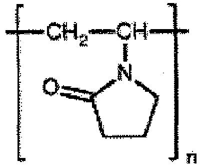

Standard commercial polyvinylpyrrolidones have molar masses in the range from ca. 2500-750 000 g/mol which are characterized by stating the K values and have - depending on the K value - glass transition temperatures from 130 to 175°C. They are supplied as white, hygroscopic powders or as aqueous solution.
In the processes according to the invention, preference is given to using PVPs with a high molecular weight, i.e. more than 400 000 g/mol and preferably from 500 000 g/mol to 2 000 000 g/mol. It is furthermore preferred for the polyvinylpyrrolidones to have a K value of more than 60, preferably more than 75 and in particular more than 80. A preferred range is between 65 and 90 for the K value.

### Water-insoluble liquid material

The microcapsules produced using the process described above contain in the interior a material that is preferably water-insoluble and liquid at 21°C (i.e. at 21°C, a maximum of 10 g of the material can be dissolved in 1 1 of water). This includes all types of hydrophobic water-insoluble liquids, and any blends thereof. Excluded are any fragrances or perfumes as such materials.
This material is also referred to hereinbelow as "oil". These oils must be able, preferably without auxiliaries, to dissolve the isocyanates in order to be able to use them in the present process. Should an oil not ensure adequate solubility of the isocyanates, there is the option of overcoming this disadvantage by using suitable solubility promoters.
Besides the aforementioned oils, the microcapsules can also have further, optionally liquid or solid, ingredients which are dissolved, dispersed or emulsified in the oil in the microcapsules.

The phrase "oil" in the context of the present invention encompasses all kinds of oil bodies or oil components, in particular vegetable oils like e.g. rape seed oil, sunflower oil, soy oil, olive oil and the like, modified vegetable oils e.g. alkoxylated sunflower or soy oil, synthetic (tri)glycerides like e.g. technical mixtures of mono, di and triglycerides of C6-C22 fatty acids, fatty acid alkyl esters e.g. methyl or ethyl esters of vegetable oils (Agnique® ME 18 RD-F, Agnique® ME 18 SD-F, Agnique® ME 12C-F, Agnique® ME1270, all products of Cognis GmbH, Germany) fatty acid alkyl esters based on said C6-C22 fatty acids, mineral oils and their mixtures. Examples illustrating the nature of suitable hydrophobic carriers without limiting the invention to these examples are: Guerbet alcohols based on fatty alcohols having 6 to 18, preferably 8 to 10, carbon atoms, esters of linear C6-C22-fatty acids with linear or branched C6-C22-fatty alcohols or esters of branched C6-C 13-carboxylic acids with linear or branched C6-C 22-fatty alcohols, such as, for example, myristyl myristate, myristyl palmitate, myristyl stearate, myristyl isostearate, myristyl oleate, myristyl behenate, myristyl erucate, cetyl myristate, cetyl palmitate, cetyl stearate, cetyl isostearate, cetyl oleate, cetyl behenate, cetyl erucate, stearyl myristate, stearyl palmitate, stearyl stearate, stearyl isostearate, stearyl oleate, stearyl behenate, stearyl erucate, isostearyl myristate, isostearyl palmitate, isostearyl stearate, isostearyl isostearate, isostearyl oleate, isostearyl behenate, isostearyl oleate, oleyl myristate, oleyl palmitate, oleyl stearate, oleyl isostearate, oleyl oleate, oleyl behenate, oleyl erucate, behenyl myristate, behenyl palmitate, behenyl stearate, behenyl isostearate, behenyl oleate, behenyl behenate, behenyl erucate, erucyl myristate, erucyl palmitate, erucyl stearate, erucyl isostearate, erucyl oleate, erucyl behenate and erucyl erucate. Also suitable are esters of linear C6-C22-fatty acids with branched alcohols, in particular 2-ethylhexanol, esters of C18-C38- alkylhydroxy carboxylic acids with linear or branched C6-C 22-fatty alcohols, in particular Dioctyl Malate, esters of linear and/or branched fatty acids with polyhydric alcohols (such as, for example, propylene glycol, dimerdiol or trimertriol) and/or Guerbet alcohols, triglycerides based on C6-C10-fatty acids, liquid mono-/di-/triglyceride mixtures based on C6-C18-fatty acids, esters of C6-C22-fatty alcohols and/or Guerbet alcohols with aromatic carboxylic acids, in particular benzoic acid, esters of C2- C12-dicarboxylic acids with linear or branched alcohols having 1 to 22 carbon atoms or polyols having 2 to 10 carbon atoms and 2 to 6 hydroxyl groups, vegetable oils, branched primary alcohols, substituted cyclohexanes, linear and branched C6-C22-fatty alcohol carbonates, such as, for example, dicaprylyl carbonate (Cetiol® CC), Guerbet carbonates, based on fatty alcohols having 6 to 18, preferably 8 to 10, carbon atoms, esters of benzoic acid with linear and/or branched C6-C22-alcohols, linear or branched, symmetrical or asymmetrical dialkyl ethers having 6 to 22 carbon atoms per alkyl group, such as, for example, dicaprylyl ether, ring-opening products of epoxidized fatty acid esters with polyols, silicone oils (cyclomethicones, silicone methicone grades, etc.), aliphatic or naphthenic hydrocarbons, such as, for example, squalane, squalene or dialkylcyclohexanes, and/or mineral oils.

Within the context of the present invention, preferred oils are, Guerbet alcohols based on fatty alcohols having 6 to 18, preferably 8 to 10, carbon atoms, esters of linear C6-C22-fatty acids with linear or branched C6-C22-fatty alcohols or esters of branched C6-C13-carboxylic acids with linear or branched C6-C22-fatty alcohols, such as e.g. myristyl myristate, myristyl palmitate, myristyl stearate, myristyl isostearate, myristyl oleate, myristyl behenate, myristyl erucate, cetyl myristate, cetyl palmitate, cetyl stearate, cetyl isostearate, cetyl oleate, cetyl behenate, cetyl erucate, stearyl myristate, stearyl palmitate, stearyl stearate, stearyl isostearate, stearyl oleate, stearyl behenate, stearyl erucate, isostearyl myristate, isostearyl palmitate, isostearyl stearate, isostearyl isostearate, isostearyl oleate, isostearyl behenate, isostearyl oleate, oleyl myristate, oleyl palmitate, oleyl stearate, oleyl isostearate, oleyl oleate, oleyl behenate, oleyl erucate, behenyl myristate, behenyl palmitate, behenyl stearate, behenyl isostearate, behenyl oleate, behenyl behenate, behenyl erucate, erucyl myristate, erucyl palmitate, erucyl stearate, erucyl isostearate, erucyl oleate, erucyl behenate and erucyl erucate.

Also preferred oils are esters of linear C6-C22-fatty acids with branched alcohols, in particular 2-ethylhexanol, esters of C18-C38-alkylhydroxycarboxylic acids with linear or branched C6-C22-fatty alcohols, linear or branched C6-C22-fatty alcohols, in particular dioctyl malates, esters of linear and/or branched fatty acids with polyhydric alcohols (such as e.g. propylene glycol, dimerdiol or trimertriol) and/or Guerbet alcohols, triglycerides based on C6-C10-fatty acids, liquid mono-/di-/triglyceride mixtures based on C6-C18-fatty acids, esters of C6-C22-fatty alcohols and/or Guerbet alcohols with aromatic carboxylic acids, in particular benzoic acid, esters of C2-C12-dicarboxylic acids with linear or branched alcohols having 1 to 22 carbon atoms or polyols having 2 to 10 carbon atoms and 2 to 6 hydroxyl groups, vegetable oils, branched primary alcohols, substituted cyclohexanes, linear and branched C6-C22-fatty alcohol carbonates, such as e.g. dicaprylyl carbonate (Cetiol TM CC), Guerbet carbonates based on fatty alcohols having 6 to 18, preferably 8 to 10, carbon atoms, esters of benzoic acid with linear and/or branched C6-C22-alcohols (e.g. Finsolv TM TN), linear or branched, symmetrical or asymmetrical dialkyl ethers having 6 to 22 carbon atoms per alkyl group, such as e.g. dicaprylyl ether (Cetiol TM OE), ring-opening products of epoxidized fatty acid esters with polyols, silicone oils (cyclomethicones, silicon methicone types etc.) and/or aliphatic or naphthenic hydrocarbons, such as e.g. squalane, squalene or dialkylcyclohexanes.

Further suitable oils or oil constituents may be UV filter substances. Typical oil-soluble UV-B filters or broad-spectrum UV A/B filters are, for example, 3-benzylidenecamphor or 3-benzylidenenorcamphor and derivatives thereof, e.g. 3-(4-methylbenzylidene)-camphor, 3-(4'-trimethylammonium)benzylidenebornan-2-one methylsulfate (Mexoryl SO), 3,3'-(1,4-phenylenedimethine)bis(7,7-dimethyl-2-oxobicycle-[2.2.1]heptane-1-methanesulfonic acid) and salts (Mexoryl SX), 3-(4'-sulfo)benzylidenebornan-2-one and salts (Mexoryl SL), polymer of N-{(2 and 4)-[2-oxoborn-3-ylidene)methyl}benzyl]acrylamide (Mexoryl SW), 2-(2H-benzotriazol-2-yl)-4-methyl-6-(2-methyl-3-(1,3,3,3-tetramethyl-1-(trimethylsilyloxy)disiloxanyl)propyl)-phenol (Mexoryl SL), 4-aminobenzoic acid derivatives, preferably 2-ethylhexyl 4-(dimethylamino)benzoate, 2-octyl 4-(dimethylamino)benzoate and amyl 4-(dimethylamino)benzoate; esters of cinnamic acid, preferably 2-ethylhexyl 4-methoxycinnamate, propyl 4-methoxycinnamate, isoamyl 4-methoxycinnamate, 2-ethylhexyl 2-cyano-3,3-phenylcinnamate (octocrylene); esters of salicylic acid, preferably 2-ethylhexyl salicylate, 4-isopropylbenzyl salicylate, homomenthyl salicylate; derivatives of benzophenone, preferably 2-hydroxy-4-methoxybenzophenone, 2-hydroxy-4-methoxy-4'-methylbenzophenone, 2,2'-dihydroxy-4-methoxybenzophenone; esters of benzalmalonic acid, preferably di-2-ethylhexyl 4-methoxybenzmalonate; triazine derivatives, such as e.g. 2,4,6-trianilino(p-carbo-2'-ethyl-1'-hexyloxy)-1,3,5-triazine and 2,4,6-tris[p-(2-ethylhexyloxycarbonyl)anilino]-1,3,5-triazine (Uvinul T 150) or bis(2-ethylhexyl) 4,4'-[(6-[4-((1,1-dimethylethyl)aminocarbonyl)phenylamino]-1,3,5-triazine-2,4-diyl)diimino]bisbenzoate (Uvasorb® HEB); 2,2-(methylenebis(6-(2H-benzotriazol-2-yl)-4-(1,1,3,3-tetramethylbutyl)phenol (Tinosorb M); 2,4-bis[4-(2-ethylhexyloxy)-2-hydroxyphenyl]-6-(4-methoxyphenyl)-1,3,5-triazine (Tinosorb S); propane-1,3-diones, such as e.g. 1-(4-tert-butylphenyl)-3-(4'-methoxyphenyl)-propane-1,3-dione; ketotricyclo(5.2.1.0)decane derivatives, dimethicodiethyl benzalmalonate (Parsol SLX).

Furthermore, liquid linear and/or branched and/or saturated or unsaturated hydrocarbons or any desired mixtures thereof can be used as oils within the context of the present invention. These may be e.g. alkanes having 4 to 22, preferably 6 to 18, carbon atoms, or any desired mixtures thereof. Also of suitability are the unsaturated hydrocarbons having 4 to 22 carbon atoms, or unsaturated hydrocarbons of identical carbon number, and any desired mixtures of these hydrocarbons. Cyclic hydrocarbons and aromatics, e.g. toluene and mixtures thereof may also be oils within the context of the present invention. Also suitable are silicone oils. Any desired mixtures of all of the specified core materials are also suitable.

It is also possible for other liquid, preferably water-insoluble materials, such as thickeners, silicone defoamers, oil soluble corrosion inhibitors and similar additives, like extreme pressure additives, yellow metal deactivators and the like, dyes or oil-soluble medicaments, emollients, odor absorbing compounds, cosmetic oil phases, film forming additive, pearlizer, vitamins, dyes, biocides to be used and be present in the microcapsules. Any desired mixtures of these further materials may also be present in the microcapsules. In cases where such material is not oil-soluble, additives may be used for dispersing or emulsifying it. Otherwise, many actives, as for example biocides or dyes often only available as blends with an oily solvent. Those compositions are also useful in the context of the present invention. Most preferred is the use of biocides, emollients, dyes, and UV-filters in the microcapsules of the present invention.

### Biocides

A biocide is a chemical substance capable of killing different forms of living organisms used in fields such as medicine, agriculture, forestry, and mosquito control. Usually, biocides are divided into two subgroups:
- pesticides, which includes fungicides, herbicides, insecticides, algicides, moluscicides, miticides and rodenticides, and
- antimicrobials, which includes germicides, antibiotics, antibacterials, antivirals, antifungals, antiprotozoals and antiparasites.

Biocides can also be added to other materials (typically liquids) to protect the material from biological infestation and growth. For example, certain types of quaternary ammonium compounds (quats) can be added to pool water or industrial water systems to act as an algicide, protecting the water from infestation and growth of algae.
Pesticides: The U.S Environmental Protection Agency (EPA) defines a pesticide as "any substance or mixture of substances intended for preventing, destroying, repelling, or mitigating any pest". A pesticide may be a chemical substance or biological agent (such as a virus or bacteria) used against pests including insects, plant pathogens, weeds, mollusks, birds, mammals, fish, nematodes (roundworms) and microbes that compete with humans for food, destroy property, spread disease or are a nuisance. In the following examples, pesticides suitable for the agrochemical compositions according to the present invention are given:
Fungicides: A fungicide is one of three main methods of pest control - the chemical control of fungi in this case. Fungicides are chemical compounds used to prevent the spread of fungi in gardens and crops. Fungicides are also used to fight fungal infections. Fungicides can either be contact or systemic. A contact fungicide kills fungi when sprayed on its surface. A systemic fungicide has to be absorbed by the fungus before the fungus dies. Examples for suitable fungicides, according to the present invention, encompass the following species: (3-ethoxypropyl)mercury bromide, 2-methoxyethyl¬mercury chloride, 2-phenylphenol, 8-hydroxyquinoline sulfate, 8-phenylmercurioxy¬quinoline, acibenzolar, acylamino acid fungicides, acypetacs, aldimorph, aliphatic nitrogen fungicides, allyl alcohol, amide fungicides, ampropylfos, anilazine, anilide fungicides, antibiotic fungicides, aromatic fungicides, aureofungin, azaconazole, azithiram, azoxystrobin, barium polysulfide, benalaxy,1 benalaxyl-M, benodanil, benomyl, benquinox, bentaluron, benthiavalicarb, benzalkonium chloride, benzamacril, benzamide fungicides, benzamorf, benzanilide fungicides, benzimidazole fungicides, benzimidazole precursor fungicides, benzimidazolylcarbamate fungicides, benzohydroxamic acid, benzothiazole fungicides, bethoxazin, binapacryl, biphenyl, bitertanol, bithionol, blasticidin-S, Bordeaux mixture, boscalid, bridged diphenyl fungicides, bromuconazole, bupirimate, Burgundy mixture, buthiobate, butylamine, calcium polysulfide, captafol, captan, carbamate fungicides, carbamorph, carbanilate fungicides, carbendazim, carboxin, carpropamid, carvone, Cheshunt mixture, chinomethionat, chlobenthiazone, chloraniformethan, chloranil, chlorfenazole, chlorodinitronaphthalene, chloroneb, chloropicrin, chlorothalonil, chlorquinox, chlozolinate, ciclopirox, climbazole, clotrimazole, conazole fungicides, conazole fungicides (imidazoles), conazole fungicides (triazoles), copper(II) acetate, copper(II) carbonate, basic, copper fungicides, copper hydroxide, copper naphthenate, copper oleate, copper oxychloride, copper(II) sulfate, copper sulfate, basic, copper zinc chromate, cresol, cufraneb, cuprobam, cuprous oxide, cyazofamid, cyclafuramid, cyclic dithiocarbamate fungicides, cycloheximide, cyflufenamid, cymoxanil, cypendazole, cyproconazole, cyprodinil, dazomet, DBCP, debacarb, decafentin, dehydroacetic acid, dicarboximide fungicides, dichlofluanid, dichlone, dichlorophen, dichlorophenyl, dicarboximide fungicides, dichlozoline, diclobutrazol, diclocymet, diclomezine, dicloran, diethofencarb, diethyl pyrocarbonate, difenoconazole, diflumetorim, dimethirimol, dimethomorph, dimoxystrobin, diniconazole, dinitrophenol fungicides, dinobuton, dinocap, dinocton, dinopenton, dinosulfon, dinoterbon, diphenylamine, dipyrithione, disulfiram, ditalimfos, dithianon, dithiocarbamate fungicides, DNOC, dodemorph, dodicin, dodine, DONATODINE, drazoxolon, edifenphos, epoxiconazole, etaconazole,etem, ethaboxam, ethirimol, ethoxyquin, ethylmercury 2,3-dihydroxypropyl mercaptide, ethylmercury acetate, ethylmercury bromide, ethylmercury chloride, ethylmercury phosphate, etridiazole, famoxadone, fenamidone, fenaminosulf, fenapanil, fenarimol, fenbuconazole, fenfuram, fenhexamid, fenitropan, fenoxanil, fenpiclonil, fenpropidin, fenpropimorph, fentin, ferbam, ferimzone, fluazinam, fludioxonil, flumetover, flumorph, fluopicolide, fluoroimide, fluotrimazole, fluoxastrobin, fluquinconazole, flusilazole, flusulfamide, flutolanil, flutriafol, folpet, formaldehyde, fosetyl, fuberidazole, furalaxyl, furametpyr, furamide fungicides, furanilide fungicides, furcarbanil, furconazole, furconazole-cis, furfural, furmecyclox, furophanate, glyodin, griseofulvin, guazatine, halacrinate, hexachlorobenzene, hexachlorobutadiene, hexachlorophene, hexaconazole, hexylthiofos, hydrargaphen, hymexazol, imazalil, imibenconazole, imidazole fungicides, iminoctadine, inorganic fungicides, inorganic mercury fungicides, iodomethane, ipconazole, iprobenfos, iprodione, iprovalicarb, isoprothiolane, isovaledione, kasugamycin, kresoxim-methyl, lime sulphur, mancopper, mancozeb, maneb, mebenil, mecarbinzid, mepanipyrim, mepronil, mercuric chloride, mercuric oxide, mercurous chloride, mercury fungicides, metalaxyl, metalaxyl-M, metam, metazoxolon, metconazole, methasulfocarb, methfuroxam, methyl bromide, methyl isothiocyanate, methylmercury benzoate, methylmercury dicyandiamide, methylmercury pentachlorophenoxide, metiram, metominostrobin, metrafenone, metsulfovax, milneb, morpholine fungicides, myclobutanil, myclozolin, N-(ethylmercury)-p-toluenesulphonanilide, nabam, natamycin, nitrostyrene, nitrothal-isopropyl, nuarimol, OCH, octhilinone, ofurace, organomercury fungicides, organophosphorus fungicides, organotin fungicides, orysastrobin, oxadixyl, oxathiin fungicides, oxazole fungicides, oxine copper, oxpoconazole, oxycarboxin, pefurazoate, penconazole, pencycuron, pentachlorophenol, penthiopyrad, phenylmercuriurea, phenylmercury acetate, phenylmercury chloride, phenylmercury derivative of pyrocatechol, phenylmercury nitrate, phenylmercury salicylate, phenylsulfamide fungicides, phosdiphen, phthalide, phthalimide fungicides, picoxystrobin, piperalin, polycarbamate, polymeric dithiocarbamate fungicides, polyoxins, polyoxorim, polysulfide fungicides, potassium azide, potassium polysulfide, potassium thiocyanate, probenazole, prochloraz, procymidone, propamocarb, propiconazole, propineb, proquinazid, prothiocarb, prothioconazole, pyracarbolid, pyraclostrobin, pyrazole fungicides, pyrazophos, pyridine fungicides, pyridinitril, pyrifenox, pyrimethanil, pyrimidine fungicides, pyroquilon, pyroxychlor, pyroxyfur, pyrrole fungicides, quinacetol, quinazamid, quinconazole, quinoline fungicides, quinone fungicides, quinoxaline fungicides, quinoxyfen, quintozene, rabenzazole, salicylanilide, silthiofam, simeconazole, sodium azide, sodium orthophenylphenoxide, sodium pentachlorophenoxide, sodium polysulfide, spiroxamine, streptomycin, strobilurin fungicides, sulfonanilide fungicides, sulfur, sultropen, TCMTB, tebuconazole, tecloftalam, tecnazene, tecoram, tetraconazole, thiabendazole, thiadifluor, thiazole fungicides, thicyofen, thifluzamide, thiocarbamate fungicides, thiochlorfenphim, thiomersal, thiophanate, thiophanate-methyl, thiophene fungicides, thioquinox, thiram, tiadinil, tioxymid, tivedo, tolclofos-methyl, tolnaftate, tolylfluanid, tolylmercury acetate, triadimefon, triadimenol, triamiphos, triarimol, triazbutil, triazine fungicides, triazole fungicides, triazoxide, tributyltin oxide, trichlamide, tricyclazole, tridemorph, trifloxystrobin, triflumizole, triforine, triticonazole, unclassified fungicides, undecylenic acid, uniconazole, urea fungicides, validamycin, valinamide fungicides, vinclozolin, zarilamid, zinc naphthenate, zineb, ziram, zoxamide and their mixtures.
Herbicides: An herbicide is a pesticide used to kill unwanted plants. Selective herbicides kill specific targets while leaving the desired crop relatively unharmed. Some of these act by interfering with the growth of the weed and are often based on plant hormones. Herbicides used to clear waste ground are nonselective and kill all plant material with which they come into contact. Herbicides are widely used in agriculture and in landscape turf management. They are applied in total vegetation control (TVC) programs for maintenance of highways and railroads. Smaller quantities are used in forestry, pasture systems, and management of areas set aside as wildlife habitat. In the following, a number of suitable herbicides are compiled:
   ∘ 2,4-D, a broadleaf herbicide in the phenoxy group used in turf and in no-till field crop production. Now mainly used in a blend with other herbicides that act as synergists, it is the most widely used herbicide in the world, third most commonly used in the United States. It is an example of synthetic auxin (plant hormone).
   ∘ Atrazine, a triazine herbicide used in corn and sorghum for control of broadleaf weeds and grasses. It is still used because of its low cost and because it works as a synergist when used with other herbicides, it is a photosystem II inhibitor.
   ∘ Clopyralid, a broadleaf herbicide in the pyridine group, used mainly in turf, rangeland, and for control of noxious thistles. Notorious for its ability to persist in compost. It is another example of synthetic auxin.
   ∘ Dicamba, a persistent broadleaf herbicide active in the soil, used on turf and field corn. It is another example of synthetic auxin.
   ∘ Glyphosate, a systemic nonselective (it kills any type of plant) herbicide used in no-till burndown and for weed control in crops that are genetically modified to resist its effects. It is an example of a EPSPs inhibitor.
   ∘ Imazapyr, a non-selective herbicide used for the control of a broad range of weeds including terrestrial annual and perennial grasses and broadleaved herbs, woody species, and riparian and emergent aquatic species.
   ∘ Imazapic, a selective herbicide for both the pre-and post-emergent control of some annual and perennial grasses and some broadleaf weeds. Imazapic kills plants by inhibiting the production of branched chain amino acids (valine, leucine, and isoleucine), which are necessary for protein synthesis and cell growth.
   ∘ Metoalachlor, a pre-emergent herbicide widely used for control of annual grasses in corn and sorghum; it has largely replaced atrazine for these uses.
   ∘ Paraquat, a nonselective contact herbicide used for no-till burndown and in aerial destruction of marijuana and coca plantings. More acutely toxic to people than any other herbicide in widespread commercial use.
   ∘ Picloram, a pyridine herbicide mainly used to control unwanted trees in pastures and edges of fields. It is another synthetic auxin.
   ∘ Triclopyr.
Insecticides: An insecticide is a pesticide used against insects in all developmental forms. They include ovicides and larvicides used against the eggs and larvae of insects. Insecticides are used in agriculture, medicine, industry and the household. In the following, suitable insecticides are mentioned:
   ∘ Chlorinated insecticides such as, for example, Camphechlor, DDT, Hexachloro¬cyclohexane, gamma-Hexachlorocyclohexane, Methoxychlor, Pentachlorophenol, TDE, Aldrin, Chlordane, Chlordecone, Dieldrin, Endosulfan, Endrin, Heptachlor, Mirex and their mixtures;
   ∘ Organophosphorus compounds such as, for example, Acephate, Azinphos-methyl, Ben¬sulide, Chlorethoxyfos, Chlorpyrifos, Chlorpyriphos-methyl, Diazinon, Dichlorvos (DDVP), Dicrotophos, Dimethoate, Disulfoton, Ethoprop, Fenamiphos, Fenitrothion, Fenthion, Fosthiazate, Malathion, Methamidophos, Methidathion, Methyl-parathion, Mevinphos, Naled, Omethoate, Oxydemeton-methyl, Parathion, Phorate, Phosalone, Phosmet, Phostebupirim, Pirimiphos-methyl, Profenofos, Terbufos, Tetrachlorvinphos, Tribufos, Trichlorfon and their mixture;
   ∘ Carbamates such as, for example, Aldicarb, Carbofuran, Carbaryl, Methomyl, 2-(1-Methylpropyl)phenyl methylcarbamate and their mixtures; ∘ Pyrethroids such as, for example, Allethrin, Bifenthrin, Deltamethrin, Permethrin, Resmethrin, Sumithrin, Tetramethrin, Tralomethrin, Transfluthrin and their mixtures;
   ∘ Plant toxin derived compounds such as, for example, Derris (rotenone), Pyrethrum, Neem (Azadirachtin), Nicotine, Caffeine and their mixtures.
Rodenticides: Rodenticides are a category of pest control chemicals intended to kill rodents. Rodents are difficult to kill with poisons because their feeding habits reflect their place as scavengers. They would eat a small bit of something and wait, and if they do not get sick, they would continue eating. An effective rodenticide must be tasteless and odorless in lethal concentrations, and have a delayed effect. In the following, examples for suitable rodenticides are given:
   ∘ Anticoagulants are defined as chronic (death occurs after 1 - 2 weeks post ingestion of the lethal dose, rarely sooner), single-dose (second generation) or multiple dose (first generation) cumulative rodenticides. Fatal internal bleeding is caused by lethal dose of anticoagulants such as brodifacoum, coumatetralyl or warfarin. These substances in effective doses are antivitamins K, blocking the enzymes K1-2,3-epoxide-reductase (this enzyme is preferentially blocked by 4-hydroxycoumarin/4-hydroxythiacoumarin derivatives) and K1-quinone-reductase (this enzyme is preferentially blocked by indandione derivatives), depriving the organism of its source of active vitamin K1. This leads to a disruption of the vitamin K cycle, resulting in an inability of production of essential blood-clotting factors (mainly coagulation factors II (prothrombin), VII (proconvertin), IX (Christmas factor) and X (Stuart factor)). In addition to this specific metabolic disruption, toxic doses of 4-hydroxycoumarin/4-hydroxythiacoumarin and indandione anticoagulants are causing damage to tiny blood vessels (capillaries), increasing their permeability, causing diffuse internal bleedings (haemorrhagias). These effects are gradual; they develop in the course of days and are not accompanied by any nociceptive perceptions, such as pain or agony. In the final phase of intoxication the exhausted rodent collapses in hypovolemic circulatory shock or severe anemia and dies calmly. Rodenticidal anticoagulants are either first generation agents (4-hydroxycoumarin type: warfarin, coumatetralyl; indandione type: pindone, diphacinone, chlorophacinone), generally requiring higher concentrations (usually between 0.005 and 0.1%), consecutive intake over days in order to accumulate the lethal dose, poor active or inactive after single feeding and less toxic than second generation agents, which are derivatives of 4-hydroxycoumarin (difenacoum, brodifacoum, bromadiolone and flocoumafen) or 4-hydroxy-1-benzothiin-2-one (4-hydroxy-1-thiacoumarin, sometimes incorrectlly referred to as 4-hydroxy-1-thiocoumarin, for reason see heterocyclic compounds), namely difethialone. Second generation agents are far more toxic than first generation agents, they are generally applied in lower concentrations in baits (usually in the order of 0.001 - 0.005%), and are lethal after single ingestion of bait and are effective also against strains of rodents that have become resistant against first generation anticoagulants; thus the second generation anticoagulants are sometimes referred to as "superwarfarins". Sometimes, anticoagulant rodenticides are potentiated by an antibiotic, most commonly by sulfaquinoxaline. The aim of this association (e.g. warfarin 0.05% + sulfaquinoxaline 0.02%, or difenacoum 0.005% + sulfaquinoxaline 0.02% etc.) is that the antibiotic/bacteriostatic agent suppresses intestinal/gut symbiotic microflora that represents a source of vitamin K. Thus the symbiotic bacteria are killed or their metabolism is impaired and the production of vitamin K by them is diminuted, an effect which logically contributes to the action of anticoagulants. Antibiotic agents other than sulfaquinoxaline may be used, for example co-trimoxazole, tetracycline, neomycin or metronidazole. A further synergism used in rodenticidal baits is that of an association of an anticoagulant with a compound with vitamin D-activity, i.e. cholecalciferol or ergocalciferol (see below). A typical formula used is, e. g., warfarin 0.025 - 0.05% + cholecalciferol 0.01%. In some countries there are even fixed three-component rodenticides, i.e. anticoagulant + antibiotic + vitamin D, e. g. difenacoum 0.005% + sulfaquinoxaline 0.02% + cholecalciferol 0.01%. Associations of a second-generation anticoagulant with an antibiotic and/or vitamin D are considered to be effective even against the most resistant strains of rodents, though some second generation anticoagulants (namely brodifacoum and difethialone), in bait concentrations of 0.0025 - 0.005% are so toxic that no known resistant strain of rodents exists and even rodents resistant against any other derivatives are reliably exterminated by application of these most toxic anticoagulants.
      Vitamin K1 has been suggested and successfully used as an antidote for pets or humans, which/who were either accidentally or intentionally (poison assaults on pets, suicidal attempts) exposed to anticoagulant poisons. In addition, since some of these poisons act by inhibiting liver functions and in progressed stages of poisoning, several blood-clotting factors as well as the whole volume of circulating blood lacks, a blood transfusion (optionally with the clotting factors present) can save a person's life who inadvertently takes them, which is an advantage over some older poisons.
   ∘ Metal phosphides have been used as a means of killing rodents and are considered single-dose fast acting rodenticides (death occurs commonly within 1-3 days after single bait ingestion). A bait consisting of food and a phosphide (usually zinc phosphide) is left where the rodents can eat it. The acid in the digestive system of the rodent reacts with the phosphide to generate the toxic phosphine gas. This method of vermin control has possible use in places where rodents are resistant to some of the anticoagulants, particularly for control of house and field mice; zinc phosphide baits are also cheaper than most second-generation anticoagulants, so that sometimes, in cases of large infestation by rodents, their population is initially reduced by copious amounts of zinc phosphide bait applied, and the rest of the population that survived the initial fast-acting poison is then eradicated by prolonged feeding on anticoagulant bait. Inversely, the individual rodents that survived anticoagulant bait poisoning (rest population) can be eradicated by pre-baiting them with nontoxic bait for a week or two (this is important to overcome bait shyness, and to get rodents used to feeding in specific areas by offering specific food, especially when eradicating rats) and subsequently applying poisoned bait of the same sort as used for pre-baiting until all consumption of the bait ceases (usually within 2-4 days). These methods of alternating rodenticides with different modes of action provides a factual or an almost 100% eradication of the rodent population in the area if the acceptance/palatability of bait is good (i.e., rodents readily feed on it).
   ∘ Phosphides are rather fast acting rat poisons, resulting in that the rats are dying usually in open areas instead of the affected buildings. Typical examples are aluminum phosphide (fumigant only), calcium phosphide (fumigant only), magnesium phosphide (fumigant only) and zinc phosphide (in baits). Zinc phosphide is typically added to rodent baits in amounts of around 0.75-2%. The baits have a strong, pungent garlic-like odor characteristic for phosphine liberated by hydrolysis. The odor attracts (or, at least, does not repulse) rodents, but has a repulsive effect on other mammals; birds, however (notably wild turkeys), are not sensitive to the smell and feed on the bait thus becoming collateral damage.
   ∘ Hypercalcemia. Calciferols (vitamins D), cholecalciferol (vitamin D3) and ergocalciferol (vitamin D2) are used as rodenticides, which are toxic to rodents for the same reason that they are beneficial to mammals: they are affecting calcium and phosphate homeostasis in the body. Vitamins D are essential in minute quantities (few IUs per kilogram body weight daily, which is only a fraction of a milligram), and like most fat soluble vitamins they are toxic in larger doses as they readily result in the so-called hypervitaminosis, which is, simply said, poisoning by the vitamin. If the poisoning is severe enough (that is, if the dose of the toxicant is high enough), it eventually leads to death. In rodents consuming the rodenticidal bait it causes hypercalcemia by raising the calcium level, mainly by increasing calcium absorption from food, mobilising bone-matrix-fixed calcium into ionised form (mainly monohydrogencarbonate calcium cation, partially bound to plasma proteins, [CaHCO3]+), which circulates dissolved in the blood plasma, and after ingestion of a lethal dose the free calcium levels are raised sufficiently so that blood vessels, kidneys, the stomach wall and lungs are mineralised/calcificated (formation of calcificates, crystals of calcium salts/complexes in the tissues thus damaging them), leading further to heart problems (myocard is sensitive to variations of free calcium levels that are affecting both myocardial contractibility and excitation propagation between atrias and ventriculas) and bleeding (due to capillary damage) and possibly kidney failure. It is considered to be single-dose, or cumulative (depending on concentration used; the common 0.075% bait concentration is lethal to most rodents after a single intake of larger portions of the bait), sub-chronic (death occurring usually within days to one week after ingestion of the bait). Applied concentrations are 0.075% cholecalciferol and 0.1% ergocalciferol when used alone. There is an important feature of calciferols toxicology which is that they are synergistic with anticoagulant toxicants. This means that mixtures of anticoagulants and calciferols in the same bait are more toxic than the sum of toxicities of the anticoagulant and the calciferol in the bait so that a massive hypercalcemic effect can be achieved by a substantially lower calciferol content in the bait and vice-versa. More pronounced anticoagulant/hemorrhagic effects are observed if calciferol is present. This synergism is mostly used in baits low in calciferol because effective concentrations of calciferols are more expensive than effective concentrations of most anticoagulants. The historically very first application of a calciferol in rodenticidal bait was, in fact, the Sorex product Sorexa® D (with a different formula than today's Sorexa® D) back in the early 1970's, containing warfarin 0.025% + ergocalciferol 0.1%. Today, Sorexa® CD contains a 0.0025% difenacoum + 0.075% cholecalciferol combination. Numerous other brand products containing either calciferols 0.075 - 0.1% (e. g. Quintox®, containing 0.075% cholecalciferol) alone, or a combination of calciferol 0.01 - 0.075% with an anticoagulant are marketed.
Miticides, moluscicides and nematicides: Miticides are pesticides that kill mites. Antibiotic miticides, carbamate miticides, formamidine miticides, mite growth regulators, organochlorine, permethrin and organophosphate miticides all belong to this category. Molluscicides are pesticides used to control mollusks, such as moths, slugs and snails. These substances include metaldehyde, methiocarb and aluminium sulfate. A nematicide is a type of chemical pesticide used to kill parasitic nematodes (a phylum of worm). A nematicide is obtained from a neem tree's seed cake; which is the residue of neem seeds after oil extraction. The neem tree is known by several names in the world but was first cultivated in India since ancient times.
Antimicrobials: In the following examples, antimicrobials suitable for agrochemical compositions according to the present invention are given. Bactericidal disinfectants mostly used are those applying
   ∘ active chlorine (i.e., hypochlorites, chloramines, dichloroisocyanurate and trichloroisocyanurate, wet chlorine, chlorine dioxide, etc.),
   ∘ active oxygen (peroxides such as peracetic acid, potassium persulfate, sodium perborate, sodium percarbonate and urea perhydrate),
   ∘ iodine (iodpovidone (povidone-iodine, Betadine), Lugol's solution, iodine tincture, iodinated nonionic surfactants),
   ∘ concentrated alcohols (mainly ethanol, 1-propanol, called also n-propanol and 2-propanol, called isopropanol and mixtures thereof; further, 2-phenoxyethanol and 1- and 2-phenoxypropanols are used), ∘ phenolic substances (such as phenol (also called "carbolic acid"), cresols (called "Lysole" in combination with liquid potassium soaps), halogenated (chlorinated, brominated) phenols, such as hexachlorophene, triclosan, trichlorophenol, tribromophenol, pentachlorophenol, Dibromol and salts thereof),
   ∘ cationic surfactants such as some quaternary ammonium cations (such as benzalkonium chloride, cetyl trimethylammonium bromide or chloride, didecyldimethylammonium chloride, cetylpyridinium chloride, benzethonium chloride) and others, non-quarternary compounds such as chlorhexidine, glucoprotamine, octenidine dihydrochloride, etc.),
   ∘ strong oxidizers such as ozone and permanganate solutions;
   ∘ heavy metals and their salts such as colloidal silver, silver nitrate, mercury chloride, phenylmercury salts, copper sulfate, copper oxide-chloride etc. Heavy metals and their salts are the most toxic and environmentally hazardous bactericides and, therefore, their use is strongly suppressed or forbidden; further, also
   ∘ properly concentrated strong acids (phosphoric, nitric, sulfuric, amidosulfuric, toluenesulfonic acids) and
   ∘ alcalis (sodium, potassium, calcium hydroxides) between pH < 1 or > 13, particularly below elevated temperatures (above 60°C) kill bacteria.

As antiseptics (i.e., germicide agents that can be used on human or animal body, skin, mucoses, wounds and the like), few of the above mentioned disinfectants can be used under proper conditions (mainly concentration, pH, temperature and toxicity toward man/animal). Among them, important are
∘ Some properly diluted chlorine preparations (e. g. Daquin's solution, 0.5% sodium or potassium hypochlorite solution, pH-adjusted to pH 7 - 8, or 0.5 - 1% solution of sodium benzenesulfochloramide (chloramine B)), some
∘ iodine preparations such as iodopovidone in various galenics (ointments, solutions, wound plasters), in the past also Lugol's solution,
∘ peroxides as urea perhydrate solutions and pH-buffered 0.1 - 0.25% peracetic acid solutions,
∘ alcohols with or without antiseptic additives, used mainly for skin antisepsis,
∘ weak organic acids such as sorbic acid, benzoic acid, lactic acid and salicylic acid
∘ some phenolic compounds such as hexachlorophene, triclosan and Dibromol, and
∘ cation-active compounds such as 0.05 - 0.5% benzalkonium, 0.5 - 4% chlorhexidine, 0.1 - 2% octenidine solutions.

Bactericidal antibiotics kill bacteria; bacteriostatic antibiotics only slow down their growth or reproduction. Penicillin is a bactericide, as are cephalosporins. Aminoglycosidic antibiotics can act in both a bactericidic manner (by disrupting cell wall precursor leading to lysis) or bacteriostatic manner (by connecting to 30s ribosomal subunit and reducing translation fidelity leading to inaccurate protein synthesis). Other bactericidal antibiotics according to the present invention include the fluoroquinolones, nitrofurans, vancomycin, monobactams, co-trimoxazole, and metronidazole. The preferred biocides are selected from the group consisting of oxyfluorfen, glyphosate, tebucanozol, desmedipham, phenmedipham, ethofumesat and their mixtures.

### Emollients

The microcapluses could also contain emollients. An emollient is a material that softens, soothes, supplies, coats, lubricates, moisturizes, or cleanses the skin. An emollient typically accomplishes several of these objectives such as soothing, moisturizing, and lubricating the skin. Suitable emollients are mostly selected from the oils as described above. Emollients useful in the present invention can be petroleum-based, fatty acid ester type, alkyl ethoxylate type, fatty acid ester ethoxylates, fatty alcohol type, polysiloxane type, or mixtures of these emollients.

### Dyes

The microcapsulesmay also contain dyes, preferably any dyes suitable and approved for cosmetic purposes. Examples include cochineal red A (C.I. 16255), patent blue V (C.I. 42051), indigotin (C.I. 73015), chlorophyllin (C.I. 75810), quinoline yellow (C.I. 47005), titanium dioxide (C.I. 77891), indanthrene blue RS (C.I. 69800) and madder lake (C.I. 58000). These dyes are normally used in concentrations of 0.001 to 0.1% by weight, based on the mixture as a whole.

Besides the beformentioned compounds the microcapules of the present invention may also contain any desired blends of oils, as well as blends of oil and water in emuslsified form. Any kind of emulsion (water-in-oil or oil-in-water, or multiple emulsions) is possible.

For this purpose emulsifiers are needed: The microcapsules according to the present invention might also conatin one or more emulsifier. Suitable emulsifiers are, for example, nonionic surfactants from at least one of the following groups: products of the addition of 2 to 30 mol ethylene oxide and/or 0 to 5 mol propylene oxide onto linear C.sub.6-22 fatty alcohols, onto C.sub.12-22 fatty acids, onto alkyl phenols containing 8 to 15 carbon atoms in the alkyl group and onto alkylamines containing 8 to 22 carbon atoms in the alkyl group; alkyl oligoglycosides containing 8 to 22 carbon atoms in the alkyl group and ethoxylated analogs thereof; addition products of 1 to 15 mol ethylene oxide onto castor oil and/or hydrogenated castor oil; addition products of 15 to 60 mol ethylene oxide onto castor oil and/or hydrogenated castor oil; partial esters of glycerol and/or sorbitan with unsaturated, linear or saturated, branched fatty acids containing 12 to 22 carbon atoms and/or hydroxycarboxylic acids containing 3 to 18 carbon atoms and addition products thereof onto 1 to 30 mol ethylene oxide; partial esters of polyglycerol (average degree of self-condensation 2 to 8), polyethylene glycol (molecular weight 400 to 5,000), trimethylolpropane, pentaerythritol, sugar alcohols (for example sorbitol), alkyl glucosides (for example methyl glucoside, butyl glucoside, lauryl glucoside) and polyglucosides (for example cellulose) with saturated and/or unsaturated, linear or branched fatty acids containing 12 to 22 carbon atoms and/or hydroxycarboxylic acids containing 3 to 18 carbon atoms and addition products thereof onto 1 to 30 mol ethylene oxide; mixed esters of pentaerythritol, fatty acids, citric acid and fatty alcohol and/or mixed esters of fatty acids containing 6 to 22 carbon atoms, methyl glucose and polyols, preferably glycerol or polyglycerol, mono-, di- and trialkyl phosphates and mono-, di- and/or tri-PEG-alkyl phosphates and salts thereof, wool wax alcohols, polysiloxane/polyalkyl/polyether copolymers and corresponding derivatives, block copolymers, for example Polyethyleneglycol-30 Dipolyhydroxystearate; polymer emulsifiers, for example Pemulen types (TR-1, TR-2) of Goodrich; polyalkylene glycols and glycerol carbonate and ethylene oxide addition products.

It is likewise possible for the ingredients to migrate from the core of the microcapsules (i.e. the oil and/or further materials present in the core) into the shell.

The invention further provides aqueous dispersions comprising 5 to 50% by weight, based on the total weight of the dispersion, preferably from 15 to 40% by weight, of microcapsules which can be produced by the above process. A further preferred range is between 20 and 35% by weight. These aqueous dispersions are preferably obtained directly from the process described above.

The microcapsule dispersions which are obtained by the present process can be used in a large number of different applications, depending on the type of oil. Preference is given to using the microcapsules for the finishing of all kind of nonwovens, like wipes (for example wet wipes or dry wipes for cosmetic or cleaning purposes), but also for finishing papers (including wallpapers, toilet paper or papers for books and newsletters), for finishing diapers or sanitary napkins and similar hygienic products or textiles e.g. in order to finish the papers or textiles with a dye or an insecticide, or in cosmetic compositions, e.g. for producing sunscreen compositions which comprise the UV filter in the form of the microcapsules. Another use pertains to finishing diapers or sanitary napkins and similar hygienic products. Furthermore the microcapsules may be used in massage oils or crèmes or personal lubricants, and suppositories, e.g. to provide this products with antiinflammatory actives.

The present invention further provides perfume-free microcapsules, preferably formaldehyde-free, and containing a liquid core of a water-insoluble liquid or a hydrophobic material, and a shell of a reaction product of at least two different at least difunctional isocyanates (A) and (B), where the isocyanate (B) must be an anionically modified isocyanate or a polyethylene oxide containing isocyanate or mixtures of the types, and an at least difunctional amine, with the proviso that during the production of the microcapsules the weight ratio between the isocyanates (A) and (B) is in the range from 10:1 to 1:10. Preferably, the aforementioned weight ratios can be adjusted, where the ratio from 3:1 to 1:1 may be attributed particular importance.

These microcapsules preferably have diameters from 1 to 50 µm and preferably diameters from 2 to 45 µm. They may be present in the form of an aqueous dispersion, where the fraction of the capsules can be 1 to 90% by weight, but preferably 5 to 50% by weight.

### Examples

Six microcapsule dispersions were produced using the process according to the invention. For the comparison, a microcapsule dispersion without the addition of an anionically modified isocyanate (B) was prepared and in each case the particle size of the capsules was determined:

### Particle size determination

The particle size determinations specified in the examples were carried out by means of static laser diffraction. The stated d 50 and d 99 values are based on the volume distribution of the particles.

### Comparative example (without isocyanate type (B) - not according to the invention)

Microcapsules were produced as follows using only one isocyanate type (A): a premix (I) was prepared from 50 g of PVP K90 and 1160 g of water and adjusted to a pH of 10.0 using aqueous sodium hydroxide solution (5% strength by weight). Premix II was prepared from 500 g of Myritol^{®} 318 (caprylic/capric triglyceride) and 90 g of Desmodur^{®} W (dicyclohexylmethane diisocyanate). The two premixes were combined and emulsified with the help of a Mig stirrer for 30 minutes at room temperature at a speed of 1000 rpm. The pH of the emulsion was then adjusted to 8.5 using aqueous sodium hydroxide solution (5% strength by weight). Then, at room temperature and with stirring at 1000 rpm, a solution of 40 g of Lupasol^{®} PR8515 (polyethyleneimine) in 160 g of water was added over the course of 1 minute. The reaction mixture was then subjected to the following temperature program: heating to 60°C in 60 minutes, maintaining this temperature for 60 minutes, then 60 minutes at 70°C, 60 minutes at 80°C, and finally 60 minutes at 85°C. The mixture was then cooled to room temperature, giving the desired microcapsule dispersion with a fraction of nonvolatile components of 34% and a particle size distribution according to the following values: d 50 = 26 µm and d 90 = 53 µm.

### Example 1:

Using two different isocyanates of types (A) and (B), microcapsules were prepared as follows: a premix (I) was prepared from 50 g of PVP K90 and 1169 g of water and adjusted to a pH of 10.0 using aqueous sodium hydroxide solution (5% strength by weight). Premix II was prepared from 500 g of Myritol^{®} 318 (caprylic/capric triglyceride), 58 g of Desmodur^{®} W (dicyclohexylmethane diisocyanate) and 39 g of Bayhydur^{®} XP 2547 (anionic HDI oligomer). These two premixes were combined and emulsified with the help of a Mig stirrer for 30 minutes at room temperature at a speed of 1000 rpm. The pH of the emulsion was then adjusted to 8.5 using aqueous sodium hydroxide solution (5% strength by weight). Then, at room temperature and with stirring at 1000 rpm, a solution of 37 g of Lupasol^{®} PR8515 (polyethyleneimine) in 147 g of water was added over the course of 1 minute. The reaction mixture was then subjected to the following temperature program: heating to 60°C in 60 minutes, maintaining this temperature for 60 minutes, then 60 minutes at 70°C, 60 minutes at 80°C and finally 60 minutes at 85°C. The mixture was then cooled to room temperature, giving the desired microcapsule dispersion with a fraction of nonvolatile components of 34% and a particle size distribution according to the following values: d 50 = 6 µm and d 90 = 10 µm.

### Example 2:

Using two different isocyanates of types (A) and (B), microcapsules were produced as follows: a premix (1) was prepared from 50 g of PVP K90 and 1169 g of water and adjusted to a pH of 10.0 using aqueous sodium hydroxide solution (5% strength by weight). Premix II was prepared from 500 g of Myritol^{®} 318 (caprylic/capric triglyceride) and 58 g of Desmodur^{®} W (dicyclohexylmethane diisocyanate). These two premixes were combined and preemulsified by stirring. Then, 39 g of Bayhydur^{®} XP 2547 (anionic HDI oligomer) were added to this preemulsion and the mixture was emulsified with the help of a Mig stirrer for 30 minutes at room temperature at a speed of 1000 rpm. The pH of the emulsion was then adjusted to 8.5 using aqueous sodium hydroxide solution (5% strength by weight). Then, at room temperature and with stirring at 1000 rpm, a solution of 37 g of Lupasol^{®} PR8515 (polyethyleneimine) in 147 g of water was added over the course of 1 minute. The reaction mixture was then subjected to the following temperature program: heating to 60°C in 60 minutes, maintaining this temperature for 60 minutes, then 60 minutes at 70°C, 60 minutes at 80°C and finally 60 minutes at 85°C. The mixture was then cooled to room temperature, giving the desired microcapsule dispersion with a fraction of nonvolatile components of 34% and a particle size distribution according to the following values: d 50 = 9 µm and d 90 = 16 µm.

### Example 3:

Using two different isocyanates of types (A) and (B), microcapsules were produced as follows: a premix (I) was prepared from 40 g of PVP K90 and 1146 g of water and adjusted to a pH of 10.0 using aqueous sodium hydroxide solution (5% strength by weight). Premix II was prepared from 500g of Myritol^{®} 318 (caprylic/capric triglyceride) and 94 g of Desmodur^{®} W (dicyclohexylmethane diisocyanate). These two premixes were combined and preemulsified by stirring. 20 g of Bayhydur^{®} XP 2655 (anionic HDI oligomer) were then added to this preemulsion and the mixture was emulsified with the help of a Mig stirrer for 30 minutes at room temperature at a speed of 1000 rpm. The pH of the emulsion was then adjusted to 8.5 with aqueous sodium hydroxide solution (5% strength by weight). Then, at room temperature and with stirring at 1000 rpm, a solution of 80 g of Lupasol^{®} G 100 (polyethyleneimine) in 120 g of water was added over the course of 1 minute. The reaction mixture was then subjected to the following temperature program: heating to 60°C in 60 minutes, maintaining this temperature for 60 minutes, then 60 minutes at 70°C, 60 minutes at 80°C and finally 60 minutes at 85°C. The mixture was then cooled to room temperature, giving the desired microcapsule dispersion with a fraction of nonvolatile components of 35% and a particle size distribution according to the following values: d 50 = 4 µm and d 90 = 8 µm.

### Example 4:

Using two different isocyanates of types (A) and (B), microcapsules were produced as follows: a premix (I) was prepared from 50 g of PVP K90 and 1134 g of water and adjusted to a pH of 10.5 using aqueous sodium hydroxide solution (5% strength by weight). Premix II was prepared from 300 g of Eutanol^{®} G (octyldodecanol), 300 g of Fitoderm (squalane) and 45 g of Desmodur^{®} N 3300 (HDI trimer). These two premixes were combined and preemulsified by stirring. 31 g of Bayhydur^{®} XP 2547 (anionic HDI oligomer) were then added to this preemulsion and the mixture was emulsified with the help of a Mig stirrer for 30 minutes at room temperature at a speed of 1000 rpm. The pH of the emulsion was then adjusted to 8.7 using aqueous sodium hydroxide solution (5% strength by weight). Then, at room temperature and with stirring at 1000 rpm, a solution of 28 g of Lupasol^{®} PR8515 (polyethyleneimine) in 112 g of water was added over the course of 1 minute. The reaction mixture was then subjected to the following temperature program: heating to 60°C in 60 minutes, maintaining this temperature for 60 minutes, then 60 minutes at 70°C, 60 minutes at 80°C and finally 60 minutes at 85°C. The mixture was then cooled to room temperature, giving the desired microcapsule dispersion with a fraction of nonvolatile components of 38% and a particle size distribution according to the following values: d 50 = 8 µm and d 90 = 20 µm.

### Example 5:

Using two isocyanates of type (A) and one of type (B), microcapsules were produced as follows: a premix (I) was prepared from 50 g of PVP K90 and 1130 g of water and adjusted to a pH of 10.0 using aqueous sodium hydroxide solution (5% strength by weight). Premix II was prepared from 500g of Myritol^{®} 318 (caprylic/capric triglyceride), 50 g of Desmodur^{®} W (dicyclohexylmethane diisocyanate), 50 g of Desmodur^{®} N 3300 (HDI trimer) and 30 g of Bayhydur^{®} XP 2547 (anionic HDI oligomer). These two preemulsions were combined and emulsified with the help of a Mig stirrer for 30 minutes at room temperature at a speed of 1000 rpm. The pH of the emulsion was then adjusted to 8.5 using aqueous sodium hydroxide solution (5% strength by weight). Then, at room temperature and with stirring at 1000 rpm, a solution of 38 g of Lupasol^{®} FG (polyethyleneimine) in 152 g of water was added over the course of 1 minute. The reaction mixture was then subjected to the following temperature program: heating to 60°C in 60 minutes, maintaining this temperature for 60 minutes, then 60 minutes at 70°C, 60 minutes at 80°C and finally 60 minutes at 85°C. The mixture was then cooled to room temperature, giving the desired microcapsule dispersion with a fraction of nonvolatile components of 33% and a particle size distribution according to the following values: d 50 = 8 µm and d 90 = 14 µm.

### Example 6:

Microcapsules were produced analogously to example 1 by using, instead of the 500 g of Myritol^{®} 318, an oil body comprising 350 g of Eusolex 2292 (octyl methoxycinnamate) and 150 g of Eusolex 9020 (butyl-methoxydibenzoylmethane). This gave a microcapsule dispersion with a fraction of nonvolatile components of 34% and a particle size distribution according to the following values: d 50 = 4 µm and d 90 = 20 µm.

## Claims

1. A process for producing microcapsules which contain a shell and a core of a liquid water-insoluble material, where an aqueous solution of a protective colloid and a solution of a mixture of at least two structurally different at least difunctional diisocyanates (A) and (B) in a water-insoluble liquid are brought together until an emulsion is formed, to which an at least difunctional amine is then added and which is then heated to temperatures of at least 60°C until the microcapsules are formed, wherein the isocyanate (B) is selected from the anionically modified isocyanates and the isocyanate (A) is uncharged and is not a polyethylene oxide-containing isocyanate, with the proviso that during the production of the microcapsules the weight ratio between the isocyanates (A) and (B) is in the range from 10:1 to 1:10 .

2. The process as claimed in claim 1, wherein a polyvinylpyrrolidone is used as protective colloid.

3. The process as claimed in at least one of claims 1 to 2, wherein the isocyanate (A) is selected from the group consisting of hexane 1,6 diisocyanate, hexane 1,6 diisocyanate biuret or oligomers of hexane 1,6 diisocyanate, in particular trimers thereof or di-cyclohexanemethylene diisocyanate.

4. The process as claimed in at least one of claims 1 to 3, wherein the isocyanate (B) is selected from the group of anionically modified diisocyanates which contain at least one sulfonic acid group, preferably an aminosulfonic acid group, in the molecule.

5. The process as claimed in at least one of claims 1 to 4, wherein the at least difunctional amine used is a polyethyleneimine.

6. The process as claimed in at least one of claims 1 to 5, wherein the weight ratio between the isocyanates (A) and (B) is in the range from 10:1 to 1:10, preferably 5:1 to 1:5 and in particular from 3:1 to 1:1.

7. The process as claimed in at least one of claims 1 to 6, wherein the core-shell ratio w/w of the microcapsules is 20:1 to 1:10, preferably 5:1 to 2:1 and in particular 4:1 to 3:1.

8. The process as claimed in at least one of claims 1 to 7, wherein
(a) a premix (I) is prepared from water and a protective colloid;
(b) this premix is adjusted to a pH in the range from 5 to 12;
(c) a further premix (II) is prepared from the liquid, water-insoluble material together with the isocyanates (A) and (B);
(d) the two premixes (I) and (II) are brought together until an emulsion is formed and
(e) the at least difunctional amine is then metered into the emulsion from step (d) and
(f) the emulsion is then heated to temperatures of at least 60°C until the microcapsules are formed.

9. The process as claimed in claim 8, wherein the pH in process step (b) is adjusted to 8 to 12.

10. The process as claimed in at least one of claims 1 to 9, wherein
(a) a premix (I) is prepared from water and a protective colloid;
(b) this premix is adjusted to a pH in the range from 5 to 12;
(c) a further premix (II) is prepared from a water-insoluble material that is liquid at 21°C together with the isocyanate (A);
(d) an emulsion is formed from the premixes (I) and (II) by stirring and to this
(e) is added the second isocyanate (B), and then the pH of the emulsion is adjusted to a value from 5 to 10;
(f) and then the at least difunctional amine is metered into the emulsion from step (e) and
(g) then heated to temperatures of at least 60°C until the microcapsules are formed.

11. The process as claimed in claim 10, wherein the pH in step (e) is adjusted to 7.5 to 9.0.

12. A perfume-free microcapsule comprising a liquid core of a water-insoluble liquid, and a shell of a reaction product of at least two different at least difunctional isocyanates (A) and (B), where (A) is uncharged and is not a polyethylene oxid-containing isocyanate and where the isocyanate (B) must be an anionically modified isocyanate, and an at least difunctional amine, with the proviso that during the production of the microcapsules the weight ratio between the isocyanates (A) and (B) is in the range from 10:1 to 1:10.

13. The microcapsule as claimed in claim 12, which has a diameter from 1 to 50 µm.

14. The microcapsule as claimed in at least one of claims 12 to 13, which is present in the form of an aqueous dispersion.

15. The microcapsule as claimed in at least one of claims 12 to 14, which is free from for-maldehyde.

16. The use of microcapsules as claimed in at least one of claims 12 to 15 for finishing of textiles, papers or nonwovens.

17. The use of microcapsules as claimed in at least one of claims 12 to 15 in cosmetic, pharmaceutical, laundry and cleaning compositions.

## Patentansprüche

1. Verfahren zur Herstellung von Mikrokapseln, die eine Hülle und einen Kern aus einem flüssigen wasserunlöslichen Material enthalten, wobei eine wässrige Lösung eines Schutzkolloids und eine Lösung einer Mischung von mindestens zwei strukturell verschiedenen mindestens difunktionalen Diisocyanaten (A) und (B) in einer wasserunlösliche Flüssigkeit zusammengebracht werden, bis sich eine Emulsion bildet, zu der man dann ein mindestens difunktionales Amin hinzugibt und anschließend auf Temperaturen von mindestens 60°C erwärmt, bis sich die Mikrokapseln bilden, bei dem das Isocyanat (B) aus den anionisch modifizierten Isocyanaten ausgewählt ist und das Isocyanat (A) ungeladen ist und kein Polyethylenoxid-haltiges Isocyanat darstellt, mit der Maßgabe, dass bei der Herstellung der Mikrokapseln das Gewichtsverhältnis zwischen den Isocyanaten (A) und (B) im Bereich von 10:1 bis 1:10 liegt.

2. Verfahren nach Anspruch 1, bei dem als Schutzkolloid ein Polyvinylpyrrolidon eingesetzt wird.

3. Verfahren nach mindestens einem der Ansprüche 1 bis 2, bei dem das Isocyanat (A) ausgewählt ist aus der Gruppe Hexan-1,6-diisocyanat, Hexan-1,6-diisocyanatbiuret oder Oligomeren des Hexan-1,6-diisocyanats, insbesondere dessen Trimeren oder Dicyclohexanmethylendiisocyanat.

4. Verfahren nach mindestens einem der Ansprüche 1 bis 3, bei dem das Isocyanat (B) ausgewählt ist aus der Gruppe der anionisch modifizierten Diisocyanate, die mindestens eine Sulfonsäuregruppe, vorzugsweise eine Aminosulfonsäuregruppe im Molekül enthalten.

5. Verfahren nach mindestens einem der Ansprüche 1 bis 4, bei dem als mindestens difunktionales Amin ein Polyethylenimin eingesetzt wird.

6. Verfahren nach mindestens einem der Ansprüche 1 bis 5, bei dem das Gewichtsverhältnis zwischen den Isoscyanten (A) und (B) im Bereich von 10:1 bis 1:10, vorzugsweise 5:1 bis 1:5 und insbesondere von 3:1 bis 1:1 liegt.

7. Verfahren nach mindestens einem der Ansprüche 1 bis 6, bei dem das Kern-Hülle-Verhältnis (w/w) der Mikrokapseln 20:1 bis 1:10, vorzugsweise 5:1 bis 2:1 und insbesondere 4:1 bis 3:1 beträgt.

8. Verfahren nach mindestens einem der Ansprüche 1 bis 7, bei dem
(a) aus Wasser und einem Schutzkolloid eine Vormischung (I) hergestellt wird;
(b) diese Vormischung auf einen pH-Wert im Bereich von 5 bis 12 eingestellt wird;
(c) eine weitere Vormischung (II) aus dem flüssigen, wasserunlöslichen Material zusammen mit den Isocyanaten (A) und (B) hergestellt wird;
(d) die beiden Vormischungen (I) und (II) zusammengebracht werden, bis sich eine Emulsion bildet und
(e) danach zu der Emulsion aus dem Schritt (d) das mindestens difunktionale Amin zudosiert wird und
(f) die Emulsion dann auf Temperaturen von mindestens 60°C erwärmt wird, bis sich die Mikrokapseln bilden.

9. Verfahren nach Anspruch 8, bei dem der pH-Wert im Verfahrensschritt (b) auf 8 bis 12 eingestellt wird.

10. Verfahren nach mindestens einem der Ansprüche 1 bis 9, bei dem
(a) aus Wasser und einem Schutzkolloid eine Vormischung (I) hergestellt wird;
(b) diese Vormischung auf einen pH-Wert im Bereich von 5 bis 12 eingestellt wird;
(c) eine weitere Vormischung (II) aus einem bei 21°C flüssigen, wasserunlöslichen Material zusammen mit dem Isocyanat (A) hergestellt wird;
(d) aus den Vormischungen (I) und (II) durch Verrühren eine Emulsion gebildet wird und zu dieser
(e) das zweite Isocyanat (B) zugegeben wird und anschließend der pH-Wert der Emulsion auf einen Wert von 5 bis 10 eingestellt wird;
(f) und danach zu der Emulsion aus dem Schritt (e) das mindestens difunktionale Amin zudosiert wird und
(g) dann auf Temperaturen von mindestens 60°C erwärmt wird, bis sich die Mikrokapseln bilden.

11. Verfahren nach Anspruch 10, bei dem der pH-Wert im Schritt (e) auf 7,5 bis 9,0 eingestellt wird.

12. Parfümfreie Mikrokapseln, enthaltend einen flüssigen Kern einer wasserunlöslichen Flüssigkeit, und eine Hülle aus einem Reaktionsprodukt aus mindestens zwei verschiedenen mindestens difunktionalen Isocyanaten (A) und (B), wobei (A) ungeladen ist und kein Polyethylenoxid-haltiges Isocyanat darstellt und das Isocyanat (B) ein anionisch modifiziertes Isocyanat sein muss, und einem mindestens difunktionalen Amin, mit der Maßgabe, dass bei der Herstellung der Mikrokapseln das Gewichtsverhältnis zwischen den Isocyanaten (A) und (B) im Bereich von 10:1 bis 1:10 liegt.

13. Mikrokapseln nach Anspruch 13, bei dem sie einen Durchmesser von 1 bis 50 µm aufweisen.

14. Mikrokapseln nach mindestens einem der Ansprüche 12 bis 13, bei dem sie in Form einer wässrigen Dispersion vorliegen.

15. Mikrokapseln nach mindestens einem der Ansprüche 12 bis 14, bei dem sie frei von Formaldehyd sind.

16. Verwendung von Mikrokapseln nach mindestens einem der Ansprüche 12 bis 15 zur Ausrüstung von Textilien, Papieren oder Vliesstoffen.

17. Verwendung von Mikrokapseln nach mindestens einem der Ansprüche 12 bis 15 in Kosmetika, Pharmazeutika, Wasch- und/oder Reinigungsmitteln.

## Revendications

1. Procédé de production de microcapsules qui contiennent une enveloppe et un noyau d'un matériau liquide insoluble dans l'eau, où une solution aqueuse d'un colloïde protecteur et une solution d'un mélange d'au moins deux diisocyanates structuralement différents au moins difonctionnels (A) et (B) dans un liquide insoluble dans l'eau sont combinées conjointement jusqu'à ce qu'une émulsion soit formée, à laquelle une amine au moins difonctionnelle est ensuite ajoutée et qui est ensuite chauffée à des températures d'au moins 60 °C jusqu'à ce que les microcapsules soient formées, dans lequel l'isocyanate (B) est choisi parmi les isocyanates anioniquement modifiés et l'isocyanate (A) est non chargé et n'est pas un isocyanate contenant du poly(oxyde d'éthylène), à condition que, pendant la production des microcapsules, le rapport en poids entre les isocyanates (A) et (B) soit dans la plage de 10:1 à 1:10.

2. Procédé selon la revendication 1, dans lequel une polyvinylpyrrolidone est utilisée en tant que colloïde protecteur.

3. Procédé selon au moins une des revendications 1 à 2, dans lequel l'isocyanate (A) est choisi dans le groupe constitué des 1,6-diisocyanatohexane, 1,6-diisocyanatohexane-biuret ou des oligomères de 1,6-diisocyanatohexane, en particulier des trimères de ceux-ci ou le diisocyanate de dicyclohexaneméthylène.

4. Procédé selon au moins une des revendications 1 à 3, dans lequel l'isocyanate (B) est choisi dans le groupe de diisocyanates anioniquement modifiés qui contiennent au moins un groupe acide sulfonique, de préférence un groupe acide aminosulfonique, dans la molécule.

5. Procédé selon au moins une des revendications 1 à 4, dans lequel l'amine au moins difonctionnelle utilisée est une polyéthylénimine.

6. Procédé selon au moins une des revendications 1 à 5, dans lequel le rapport en poids entre les isocyanates (A) et (B) est dans la plage de 10:1 à 1:10, de préférence de 5:1 à 1:5 et en particulier de 3:1 à 1:1.

7. Procédé selon au moins une des revendications 1 à 6, dans lequel le rapport noyau-enveloppe m/m des microcapsules est de 20:1 à 1:10, de préférence 5:1 à 2:1 et en particulier de 4:1 à 3:1.

8. Procédé selon au moins une des revendications 1 à 7, dans lequel
(a) un prémélange (I) est préparé à partir d'eau et d'un colloïde protecteur ;
(b) ce prémélange est ajusté à un pH dans la plage de 5 à 12 ;
(c) un prémélange supplémentaire (II) est préparé à partir du matériau liquide insoluble dans l'eau conjointement avec les isocyanates (A) et (B) ;
(d) les deux prémélanges (I) et (II) sont combinés conjointement jusqu'à ce qu'une émulsion soit formée et
(e) l'amine au moins difonctionnelle est ensuite ajoutée de façon dosée dans l'émulsion de l'étape (d) et
(f) l'émulsion est ensuite chauffée à des températures d'au moins 60 °C jusqu'à ce que les microcapsules soient formées.

9. Procédé selon la revendication 8, dans lequel le pH dans l'étape de procédé (b) est ajusté à 8 à 12.

10. Procédé selon au moins une des revendications 1 à 9, dans lequel
(a) un prémélange (I) est préparé à partir d'eau et d'un colloïde protecteur ;
(b) ce prémélange est ajusté à un pH dans la plage de 5 à 12 ;
(c) un autre prémélange (II) est préparé à partir d'un matériau insoluble dans l'eau qui est liquide à 21 °C conjointement avec l'isocyanate (A) ;
(d) une émulsion est formée à partir des prémélanges (I) et (II) par agitation et à ceci
(e) est ajouté le deuxième isocyanate (B), et ensuite le pH de l'émulsion est ajusté à une valeur de 5 à 10 ;
(f) et ensuite l'amine au moins difonctionnelle est ajoutée de façon dosée dans l'émulsion de l'étape (e) et
(g) ensuite chauffée à des températures d'au moins 60 °C jusqu'à ce que les microcapsules soient formées.

11. Procédé selon la revendication 10, dans lequel le pH dans l'étape (e) est ajusté à 7,5 à 9,0.

12. Microcapsule sans parfum comprenant un noyau liquide d'un liquide insoluble dans l'eau, et une enveloppe d'un produit de réaction d'au moins deux isocyanates au moins difonctionnels différents (A) et (B), où (A) est non chargé et n'est pas un isocyanate contenant du poly(oxyde d'éthylène) et où l'isocyanate (B) doit être un isocyanate anioniquement modifié, et une amine au moins difonctionnelle, à condition que, pendant la production des microcapsules, le rapport en poids entre les isocyanates (A) et (B) est dans la plage de 10:1 à 1:10.

13. Microcapsule selon la revendication 12, qui a un diamètre de 1 à 50 µm.

14. Microcapsule selon au moins une des revendications 12 à 13, qui est présente sous la forme d'une dispersion aqueuse.

15. Microcapsule selon au moins une des revendications 12 à 14, qui est exempte de formaldéhyde.

16. Utilisation de microcapsules selon au moins une des revendications 12 à 15 pour la finition de textiles, de papiers ou de non-tissés.

17. Utilisation de microcapsules selon au moins une des revendications 12 à 15 dans des compositions cosmétiques, pharmaceutiques, de blanchisserie et de nettoyage.
